(19) Europäisches Patentamt / European Patent Office / Office européen des brevets

(11) **EP 4 487 979 A1**

(12) **EUROPEAN PATENT APPLICATION**
published in accordance with Art. 153(4) EPC

(43) Date of publication:
**08.01.2025   Bulletin 2025/02**

(21) Application number: 23759616.8

(22) Date of filing: **01.02.2023**

(51) International Patent Classification (IPC):
**B22F 1/00** (2022.01)          **B22F 3/105** (2006.01)
**B22F 10/28** (2021.01)          **B22F 10/34** (2021.01)
**B33Y 70/00** (2020.01)          **B33Y 80/00** (2015.01)
**C22C 9/00** (2006.01)          **B22F 10/64** (2021.01)

(52) Cooperative Patent Classification (CPC):
**B22F 1/00; B22F 3/105; B22F 10/28; B22F 10/34;
B33Y 70/00; B33Y 80/00; C22C 9/00;** B22F 10/64;
Y02P 10/25

(86) International application number:
**PCT/JP2023/003297**

(87) International publication number:
**WO 2023/162610 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   28.02.2022   JP 2022029290
                 12.09.2022   JP 2022144415

(71) Applicant: Sanyo Special Steel Co., Ltd.
**Himeji-shi, Hyogo 672-8677 (JP)**

(72) Inventors:
• **SAKATA, Masahiro**
  **Nishinomiya-Shi Hyogo 663-8003 (JP)**
• **IKEDA, Hiroki**
  **Himeji-shi, Hyogo 672-8677 (JP)**
• **SAWADA, Toshiyuki**
  **Himeji-shi, Hyogo 672-8677 (JP)**

(74) Representative: **Potter Clarkson
Chapel Quarter
Mount Street
Nottingham NG1 6HQ (GB)**

(54) **CU-BASED ALLOY POWDER HAVING EXCELLENT ELECTRIC CONDUCTIVITY**

(57)   Provided is a Cu-based alloy powder that is suitable for shaping by a process involving rapid melting and rapid solidification, and is capable of producing a Cu-based alloy shaped object having excellent relative density, electrical conductivity, and strength. The Cu-based alloy powder includes, in terms of % by mass, from 0.05 to 10.0% of an additive element M1 component and from 0.01 to 1.00% of a third element M2 component, with a balance of Cu and unavoidable impurities. The M1 component consists of one or more of Nd, Zr, Mo, and Cr, and the M2 component consists of one or more elements that have a solid solubility limit in the M1 component added to the alloy powder of 1.0% by mass or less.

EP 4 487 979 A1

**Description**

TECHNICAL FIELD

The present invention relates to a Cu-based alloy powder having excellent electrical conductivity that is suitable for processes involving rapid melting and rapid solidification, such as three-dimensional additive manufacturing, thermal spraying, laser coating, and weld overlaying. In particular, the present invention relates to a Cu-based alloy powder having excellent electrical conductivity that is suitable for additive manufacturing using a powder bed method (powder bed fusion method).

BACKGROUND ART

3D printers are beginning to be used to create shaped objects made of metal. A 3D printer is a device that creates shaped objects by using an additive manufacturing method. Typical metal additive manufacturing methods include a powder bed method (powder bed fusion method), a metal deposition method (directed energy deposition method), and the like. In a powder bed method, laser or electron beam irradiation causes the irradiated part of the spread powder to melt and solidify. The melting and solidification cause the powder particles to fuse together. The irradiation is selectively applied to a part of the metal powder. The parts that are not irradiated do not melt, and a fused layer is formed only in the irradiated part.

New metal powder is further spread over the formed fused layer, and the new metal powder is irradiated with a laser beam or an electron beam. The irradiation causes the metal particles to melt and solidify, thereby forming a new fused layer. The new fused layer is also fused to the existing fused layer.

By sequentially repeating melting and solidification by irradiation, an aggregate of fused layers is gradually grown. As a result of this growth, a shaped object having a three-dimensional shape is obtained. By using such an additive manufacturing method, a shaped object having a complex shape can be easily obtained.

As a powder-bed additive manufacturing method, Patent Literature 1 (JP2008-81840A) discloses a method for producing a three-dimensional shaped object by repeating a step of spreading a metal powder for metal photolithography including an iron-based powder and one or more powders selected from the group consisting of nickel, a nickel-based alloy, copper, a copper-based alloy, and graphite, a step of irradiating the powder layer with a beam to form a sintered layer, and a step of cutting the surface of the shaped object.

High conductivity is required for alloys used in high-frequency induction heating devices, motor cooling heat sinks, and the like. Cu-based alloys are suitable for such applications. Because the parts used in such applications have complex shapes, additive manufacturing methods are attracting attention, and the benefits of additive manufacturing methods can be utilized.

However, since copper has a low light absorption coefficient at the laser wavelength of 1064 nm used in general-purpose laser additive manufacturing, the energy required for melting and solidification cannot be sufficiently obtained, making it difficult to produce the shaped object. Therefore, copper alloys having an improved light absorption coefficient and excellent shaping properties are being developed. For example, Patent Literature 2 (WO2019/039058) proposes a copper alloy having copper as a main component and that contains an additive element having a solid solution amount in copper of less than 0.2 at%. This proposal is intended to obtain mechanical strength while reducing a decrease in electrical conductivity caused by the additive element dissolving in solid solution in the copper by using an additive element that does not dissolve much in copper. In the proposal, an element that does not easily form a solid solution in copper based on a binary diagram or the like is added so it does not dissolve.

CITATION LIST

PATENT LITERATURE

Patent Literature 1: JP2008-81840A
Patent Literature 2: WO2019/039058

SUMMARY OF INVENTION

In additive manufacturing methods, the metal material is rapidly melted and rapidly cooled to solidify. Conventional powders are unsuitable for use in processes involving such rapid melting and rapid solidification, and even if conventional powders are used, a high-density shaped object generally cannot be obtained immediately.

For example, Cu powder reflects the laser light for irradiation in additive manufacturing more than other metal powders because pure Cu has a low light absorption coefficient (hereinafter, the ratio of laser light that is reflected is referred to as "laser reflection coefficient"), and thus Cu powder has poor energy efficiency and is unsuitable for additive manufacturing. When compared with the laser reflection coefficient of Fe-based alloys, Ni-based alloys, Co-based alloys, and the like, the laser reflection coefficient of pure Cu is higher. If pure Cu powder is used in a process involving rapid melting and rapid solidification, a lot of heat is released to the atmosphere due to the high laser reflection coefficient. As a result, the amount of heat applied to the powder is not sufficient to melt the powder. This lack of heat leads to poor fusion between the particles. Due to the lack of heat, unmelted particles remain in the interior of the shaped object obtained from this powder. As a result, a shaped object obtained using such a powder has a low relative density.

Attempts have also been made to reduce the laser reflection coefficient of Cu-based alloys by adding an additive element. However, when an additive element is added, there is a problem in that even if heat treatment is performed, the additive element may not sufficiently precipitate, and may form a solid solution in the parent phase of the Cu-based alloy, resulting in a decrease in electrical conductivity.

On the other hand, if pure Cu powder is irradiated with a laser having a high energy density, remaining unmelted particles may be suppressed, but a laser having a high energy density tends to cause bumping of the molten metal. This bumping becomes a cause of voids inside the shaped object. A shaped object in which there are voids has a low relative density. Further, in addition to the bumping of the molten metal, there is also the problem that a laser having a high energy density generates a large amount of spatter and fumes.

An object of the present invention is to provide a Cu-based alloy powder that is suitable for shaping by a process involving rapid melting and rapid solidification, and is capable of producing a Cu-based alloy shaped object having excellent relative density, electrical conductivity, and strength. In addition, another object of the present invention is to provide a shaped object of a Cu-based alloy that has excellent relative density, electrical conductivity, and strength.

Cu is an element having extremely excellent electrical conductivity, and hence when an additive element M1 component is added to reduce the laser reflection coefficient of Cu, although the reflection coefficient is suppressed, conductivity decreases. Even when using a powder in which only the M1 component is added to the Cu-based alloy, although it is possible to carry out a heat treatment after shaping to cause the additive elements that form a solid solution to precipitate from the parent phase and allow the electrical conductivity to recover, even this this is not enough. Even for an additive element having a small solid solubility limit in Cu, it is difficult to sufficiently precipitate the additive element through heat treatment, and it is still not easy to obtain electrical conductivity close to that of pure Cu.

For example, Patent Literature 2 proposes a copper alloy containing an additive element having a solid solubility limit of less than 0.2 at% in order to ensure electrical conductivity. However, even when the solid solubility limit of the additive element M1 is as small as less than 0.2 at%, it is difficult and not easy to sufficiently precipitate the solid solution element M1 through heat treatment.

Accordingly, as a result of intensive studies, in addition to adding an additive element group M1 that is effective in reducing the reflection coefficient, the present inventors further added a third element M2 component that tends to form a precipitate with the added M1 component. Since the third element M2 tends to form a precipitate with the additive element M1 component in the parent phase and is precipitated from the parent phase, electrical conductivity close to that of pure Cu can be obtained. Further, the solid solubility limit of the M2 component does not necessarily have to be limited to less than 0.2 at%. The present inventors found that even if the solid solubility limit is 0.2 at% or more, due to an increase in the precipitability of M1, electrical conductivity is excellent. In addition, the present inventors found that if these precipitates are formed finely, the precipitates also contribute to an improvement in strength.

The present invention provides the following aspects:

[Aspect 1] A Cu-based alloy powder comprising, in terms of % by mass:

from 0.05 to 10.0% of an additive element M1 component consisting of one or more selected from the group consisting of Nd, Zr, Mo, and Cr; and
from 0.01 to 1.00% of a third element M2 component consisting of one or more elements that have a solid solubility limit in the M1 component contained in the Cu-based alloy powder of 1.0% by mass or less;
the balance consisting of Cu and unavoidable impurities.

[Aspect 2] The Cu-based alloy powder according to aspect 1, wherein the M2 component consists of one or more selected from the group consisting of Ag, Ni, and Sn.
[Aspect 3] The Cu-based alloy powder according to aspect 1 or 2, wherein the Cu-based alloy powder has a sphericity of from 0.80 to 0.95.
[Aspect 4] The Cu-based alloy powder according to any one of aspects 1 to 3, wherein the Cu-based alloy powder has an average particle diameter $D_{50}$ of from 10 to 100 $\mu$m.
[Aspect 5] A shaped object made of a Cu-based alloy comprising, in terms of % by mass:

from 0.05 to 10.0% of an additive element M1 component consisting of one or more selected from Nd, Zr, Mo, and Cr; and

from 0.01 to 1.00% of a third element M2 component consisting of one or more elements that have a solid solubility limit in the M1 component contained in the Cu-based alloy of 1.0% by mass or less;

the balance consisting of Cu and unavoidable impurities,

wherein not only a first precipitate consisting of Cu and the M1 component but also a second precipitate containing the M2 component are precipitated in the Cu-based alloy.

[Aspect 6] The Cu-based alloy shaped object according to aspect 5, wherein the M2 component consists of one or more selected from the group consisting of Ag, Ni, and Sn, and the second precipitate is a precipitate that includes the M1 component and the M2 component.

[Aspect 7] The Cu-based alloy shaped object according to aspect 5 or 6, wherein the second precipitate has a size of 1000 nm or less in terms of equivalent circle diameter.

[Aspect 8] The Cu-based alloy shaped object according to any one of aspects 5 to 7, wherein the Cu-based alloy shaped object has a relative density of 97.0% or more.

[Aspect 9] The Cu-based alloy shaped object according to any one of aspects 5 to 8, wherein the Cu-based alloy shaped object has an electrical conductivity of 70.0% IACS or higher.

[Aspect 10] The Cu-based alloy shaped object according to any one of aspects 5 to 9, obtained by an additive manufacturing method using the Cu-based alloy powder according to any one of aspects 1 to 4.

Thus, the Cu-based alloy powder of the present invention further contains the M2 component, which tends to form a precipitate with the M1 component. As a result, a shaped object that is made of a Cu-based alloy using this powder has excellent electrical conductivity because the M1 component that is dissolved in solid solution in the Cu of the parent phase can sufficiently precipitate from the parent phase.

Further, Patent Literature 2 shows a comparative example in which the electrical conductivity decreased when an element having a solid solubility limit of 0.2 at% or more in copper was added, but in the present invention an effect in which it is easier for the M1 component to precipitate from the parent phase is obtained even when an M2 component having a solid solubility limit of 0.2 at% or more is added. Therefore, in a shaped object made of the Cu-based alloy of the present invention, unlike the case in Patent Literature 2, even when an element having a solid solubility limit of 0.2 at% or more is added to Cu, instead of the electrical conductivity decreasing, rather, the electrical conductivity can be improved.

Therefore, when the Cu-based alloy powder of the present invention is used to produce a shaped object by a rapid melting rapid solidification method, a shaped object is obtained that has an extremely high relative density of 97.0 or more (for example, 99.0% or more) and an electrical conductivity of 70.0% IACS or higher. Further, a fine precipitate can improve the strength of the shaped object.

DESCRIPTION OF EMBODIMENTS

First, prior to describing the embodiments of the Cu-based alloy powder of the present invention, the reason why the components of each powder (in the following, "%" refers to "% by mass") will be described. Herein, unless otherwise specified, "average particle diameter $D_{50}$" refers to the particle diameter (median diameter) at the point where the cumulative volume is 50% on a volume-based cumulative curve obtained by a laser diffraction scattering method. "X to Y" indicating a range means "equal to or more than X and equal to or less than Y."

Cu-based alloy powder

The Cu-based alloy of the present invention contains one or more selected from Nd, Zr, Mo, and Cr as an additive element M1 component. The Nd, Zr, Mo, and Cr of the M1 component all have a small solid solubility limit in Cu in an equilibrium diagram. However, if the Cu-based alloy powder is obtained by a method involving rapid solidification such as an atomization method, the element M1 component forms a supersaturated solid solution in the Cu. As a result, in this supersaturated solid solution, the laser reflection coefficient is suppressed. Therefore, when the M1 component is included, heat can be efficiently absorbed. This enables a laser having a lower energy density to be used when shaping the Cu-based alloy powders by a process that involves rapid melting and rapid solidification. Moreover, bumping of molten metal is suppressed. Therefore, by this process, a shaped object having a high relative density and few internal voids can be obtained.

The content of the M1 component in the Cu-based alloy of the present invention is preferably 10.0% or less. When the Cu-based alloy powder contains two or more M1 components selected from Nd, Zr, Mo, and Cr, the total content thereof is preferably 10.0% or less. If the content of the M1 component in the Cu-based alloy powder is 10.0% or less, a shaped object having excellent electrical conductivity can be obtained. From this viewpoint, the content of the M1 component is more preferably 5.0% by mass or less, and particularly preferably 3.0% by mass. From the viewpoint that a shaped object having a large relative density can be obtained using a laser that has a lower energy density, the content of the M1 component is more preferably 0.05% by mass or more, further preferably 0.2% by mass or more, and particularly preferably 0.5% by mass or more. Therefore, the content of the M1 component is preferably from 0.05 to 10.0%, more preferably from 0.2 to 5.0%, and particularly preferably from 0.5 to 3.0%.

The Cu-based alloy of the present invention contains, as a third element M2 component, one or more elements having a solid solubility limit of 1.0% by mass or less in the M1 component added to the alloy powder. The M2 component forms a precipitate with the M1 component. If only the M1 component is present, it is difficult to sufficiently precipitate the M1 component by heat treatment alone, but when the M2 component is added, the M1 component dissolved in solid solution in the Cu parent phase precipitates as a precipitate with the M2 component, and thus electrical conductivity can be improved more than when only the M1 component is added.

When 0.01% by mass or more of the M2 component is added, a precipitate including the M1 component and the M2 component tends to be formed. Therefore, the content of the M2 component is set to be 0.01% or more, and more preferably 0.05% or more. However, if the M2 component is added in a large amount, electrical conductivity decreases, and thus the M2 component is set to be 1.00% by mass or less, and more preferably 0.50% by mass or less. Therefore, the content of the M2 component is from 0.01 to 1.00%, and more preferably from 0.05 to 0.50%.

For example, the M2 component is preferably one or more of Ag, Ni, and Sn. Ag, Ni, and Sn are all elements having a solid solubility limit of 1.0% by mass or less in any of the types of M1 components in the equilibrium diagram, and thus when added as the M2 component, tend to form a precipitate with the M1 component, and as a result electrical conductivity can be improved. That is, the solid solubility limit of the M2 component here refers to the maximum amount dissolved in solid solution in the M1 component at room temperature in the equilibrium diagram. It is noted that since the equilibrium diagram is a known technical matter, the solid solubility limit of M1 and M2 can be confirmed based thereon. Nd-Ag, Zr-Ag, Cr-Ag, Mo-Ag, Zr-Ni, Mo-Ni, and Nd-Sn all have a solid solubility limit of 1% by mass or less in the equilibrium diagram.

In addition, in the present invention, other than the M1 component and the M2 component, Si, P, and S may be contained as unavoidable impurities. However, in that case, Si is preferably 0.10% or less, P is preferably 0.10% or less, and S is preferably 0.10% or less. Among unavoidable impurities, Si, P and S inhibit electrical and thermal conduction in copper alloys. Further, since Si, P and S are elements that are sensitive to the occurrence of cracks during shaping, it is necessary to avoid containing those elements in large amounts.

Si (silicon) forms a solid solution in Cu, and inhibits the electrical conduction and thermal conduction of the copper alloy. From this viewpoint, the content of Si is preferably 0.10% or less, and more preferably 0.05% or less.

P (phosphorus) forms a solid solution in Cu, and inhibits the electrical conduction and thermal conduction of the copper alloy. From this viewpoint, the P content is preferably 0.10% or less, and more preferably 0.05% or less.

S (sulfur) forms a solid solution in Cu, and inhibits the electrical conduction and thermal conduction of the copper alloy. From this viewpoint, the S content is preferably 0.10% or less, and more preferably 0.05% or less.

The sphericity of the Cu-based alloy powder of the present invention is preferably from 0.80 to 0.95. A coated powder having a sphericity of 0.80 or more has excellent fluidity. From this viewpoint, the sphericity is preferably 0.83 or more, and more preferably 0.85 or more. A coated powder having a sphericity of 0.95 or less can suppress laser reflection. From this viewpoint, the sphericity is preferably 0.93 or less, and more preferably 0.90 or less. Therefore, the sphericity of the Cu-based alloy powder is preferably from 0.80 to 0.95, more preferably from 0.83 to 0.93, and further preferably from 0.85 to 0.90.

To measure sphericity, a test piece is prepared by embedding a powder in a resin, the test piece is subjected to mirror polishing, and then the polished surface is observed with an optical microscope. The magnification of the microscope is 100-times. Image analysis is performed on 20 randomly selected particles, and the sphericity of the particles is measured. The sphericity of a particle is the ratio of the length in the direction perpendicular to the longest line segment that can be drawn within the outline of the particle to the length of the longest line segment. The average of the 20 measured values is the sphericity of the powder.

In the present invention, the average particle diameter $D_{50}$ of the Cu-based alloy powder is preferably from 10 to 100 $\mu$m. A powder obtained using a Cu-based alloy powder having an average particle diameter $D_{50}$ of 10 $\mu$m or more has excellent fluidity. From this viewpoint, the average particle diameter $D_{50}$ of the Cu-based alloy powder is more preferably 20 $\mu$m or more, and particularly preferably 30 $\mu$m or more. By using a Cu-based alloy powder having an average particle diameter $D_{50}$ of 100 $\mu$m or less, a shaped object having a high relative density can be obtained. From this viewpoint, the average particle diameter $D_{50}$ is more preferably 80 $\mu$m or less, and particularly preferably 60 $\mu$m or less. Therefore, the average particle diameter $D_{50}$ of the Cu-based alloy powder is preferably from 10 to 100 $\mu$m, more preferably from 20 to 80 $\mu$m, and further preferably from 30 to 60 $\mu$m.

To measure the average particle diameter $D_{50}$, the total volume of the powder is assumed to be 100%, and a cumulative curve is determined. The particle diameter at the point on the curve where the cumulative volume is 50% is the average particle diameter $D_{50}$. The average particle diameter $D_{50}$ is measured by a laser diffraction scattering method. An example of an apparatus suitable for this measurement is a laser diffraction/scattering particle diameter distribution measuring apparatus "Microtrac MT3000" manufactured by Nikkiso Co., Ltd. A coated powder is poured into the cell of the apparatus together with pure water, and the particle diameter is detected based on the light scattering information on the particles.

Cu-based alloy powder production method

The method for producing the Cu-based alloy powder is not particularly limited, and examples thereof include water atomization, single-roll quenching, twin-roll quenching, gas atomization, disk atomization, and centrifugal atomization. Preferred production methods are single-roll quenching, gas atomization, and disk atomization. The Cu-based alloy powder may be subjected to mechanical milling or the like. Examples of the milling method include ball milling, bead milling, planetary ball milling, an attritor method, and vibrating ball milling.

Cu-based alloy shaped object production method

Various types of shaped object can be produced from the Cu-based alloy powder according to the present invention by rapid melting and rapid cooling. The method for producing a shaped object includes (1) a step of preparing a powder, and (2) a step of melting and solidifying the powder to obtain a shaped object that had not been heat treated yet.

Examples of the step of melting and solidifying the powder include a rapid melting and rapid solidification process. Specific examples of this process include a three-dimensional additive manufacturing method, a thermal spraying method, a laser coating method, and a weld overlaying method. The Cu-based alloy powder of the present invention is suitable for absorbing laser light to melt and solidify at a low energy density, and thus is suited to creating a shaped object while adding layers by a powder bed method (powder bed fusion method) three-dimensional additive manufacturing method.

A 3D printer can be used for the three-dimensional additive manufacturing method. In the additive manufacturing method, a spread coating powder is irradiated with a laser beam or an electron beam. The irradiation causes the coated particles to rapidly heat up and rapidly melt. The coated particles then rapidly solidify. The melting and solidification cause the coated particles to fuse together. The irradiation is selectively applied to a part of the coated powder. The parts of the coated powder that are not irradiated do not melt. A fused layer is formed only in the irradiated part.

In the powder bed method, the irradiated part of the spread powder is melted and solidified by irradiation with a laser beam or an electron beam. The melting and solidification cause the powder particles to fuse together. Irradiation is selectively applied to a part of the Cu-based alloy powder. The parts that are not irradiated do not melt, and a fused layer is formed only in the irradiated part.

A new Cu-based alloy powder is further spread over the formed fused layer, and the Cu-based alloy powders are irradiated with a laser beam or an electron beam. The metal particles are then melted and solidified by irradiation, forming a new fused layer. Additionally, the new fused layer is also fused with the existing fused layer.

By sequentially repeating melting and solidification by irradiation, the aggregate of the fused layers gradually grows. This growth results in a shaped object having a three-dimensional shape. By using such an additive manufacturing method, a copper alloy shaped object having a complex shape can be easily obtained.

The energy density E.D. of the laser beam or electron beam for irradiation during shaping is preferably 120 $J/mm^3$ or more. This is because, conventionally, when sintering a Cu-based alloy powder by a rapid melting and rapid solidification process, if the energy density for irradiation during the formation of the fused layers is 120 $J/mm^3$ or more, sufficient heat is applied to the powder, unmelted powder is suppressed from remaining inside the shaped object, and the relative density of the shaped object is increased. However, if the energy density E.D. exceeds 180 $J/mm^3$, excessive heat tends to be applied to the powder. Therefore, in order to suppress bumping of the molten metal and suppress the formation of pores in the shaped object, the energy density E.D. is more preferably 170 $J/mm^3$ or less, and particularly preferably 160 $J/mm^3$ or less.

Preferably, the method for producing the shaped object further includes (3) a step of heat-treating the shaped object obtained in step (2) that had not been heat treated yet to obtain the shaped object. A preferred heat treatment is an aging treatment. By carrying out an aging treatment, a single phase of the M1 component or a compound of Cu and the M1 component precipitates at the grain boundaries. This precipitation increases the purity of the Cu in the matrix phase. This matrix phase can contribute to improving the electrical conductivity of the shaped object.

If the M1 component added to increase the laser reflection coefficient can be precipitated, a decrease in electrical conductivity can be avoided. However, since it is not easy to precipitate by an aging treatment alone, in the present invention, a precipitate containing the M1 component and the M2 component is formed by adding the M2 component in addition to the M1 component.

In the aging treatment, the shaped object that had not been heat treated yet is held at a predetermined temperature for a predetermined time. The aging temperature is preferably 350°C or higher and 1000°C or lower. By aging at a temperature of 350°C or higher, a structure in which a single phase of the M1 component or a compound of Cu and the M1 component is sufficiently precipitated is obtained. From this viewpoint, the aging temperature is more preferably 400°C or higher, and particularly preferably 450°C or higher. When aging at a temperature of 1000°C or lower, dissolution of the M1 component in solid solution in the matrix phase is suppressed. From this viewpoint, the aging temperature is more preferably 950°C or lower, and particularly preferably 900°C or lower. When element M is 0.0% by mass, there is no structure to precipitate, and so a heat treatment is not necessary.

The aging time is preferably 1 hour or more and 10 hours or less. By aging for one hour or more, a structure in which a single phase of element M or a compound of Cu and the M1 component is sufficiently precipitated is obtained. From this viewpoint, the aging time is more preferably 1.3 hours or more, and particularly preferably 1.5 hours or more. However, as the aging time becomes longer, the crystal grains become coarser and strength decreases, and so the aging time is preferably 10 hours or less. In addition, energy costs are suppressed when the aging time is 10 hours or less. From these viewpoints, the aging time is more preferably 9.7 hours or less, and particularly preferably 9.5 hours or less.

Cu-based alloy shaped object

The relative density of the copper alloy shaped object obtained by the rapid melting and rapid solidification process is preferably 97.0% or more. If the relative density of the copper alloy shaped object produced by additive manufacturing is 97.0% or more, a copper alloy shaped object with few defects inside the shaped object and excellent electrical conductivity can be obtained. The relative density is more preferably 98.0% or more, and particularly preferably 99.0% or more.

Relative density (%) is calculated by dividing the density of a 10 mm-square test piece produced by an additive manufacturing method or the like by the true density of the raw material powder, and multiplying by 100. First, the density of the 10 mm-square test piece can be measured by the Archimedes method. Meanwhile, the true density of the powder can be measured using a dry density meter. For example, the true density can be measured by a constant volume expansion method using He gas displacement. An example of a device suitable for this measurement is the dry automatic density meter "AccuPyc1330" manufactured by Shimadzu Corporation. Powder is filled into the cell of this device and the density of the powder is measured.

Precipitates containing M1 (i.e., a first precipitate composed of Cu and M1, and a second precipitate containing M2) are present inside the copper alloy shaped object. Precipitation of the M1 component means that the M1 dissolved in solid solution in the Cu parent phase is forced out, which contributes to improving electrical conductivity. If the size of the precipitate exceeds 1000 nm, the precipitate will impede the conductive path and reduce strength. From this point of view, the size of the compound containing the M1 component and the M2 component (second precipitate) is preferably 1000 nm or less, more preferably from 30 to 800 nm, and further preferably from 50 to 500 nm. The second precipitate may contain Cu in addition to the M1 component and the M2 component.

The electrical conductivity of the copper alloy shaped object after heat treatment is preferably 70% IACS or higher. A shaped object having an electrical conductivity of 70% IACS or higher has excellent electrical conductivity. More preferably, the electrical conductivity is 80% IACS or higher.

The electrical conductivity can be measured as follows. First, a test piece ($3\times2\times60$ mm) is prepared, and an electrical resistance value ($\Omega$) of the test piece is measured by a four-terminal method in accordance with "JIS C 2525". The measurement can be performed using an apparatus "TER-2000RH Model" from ULVAC-RIKO, Inc. under the following measurement conditions.

| Temperature: | 25°C |
| Current: | 4 A |
| Voltage drop distance: | 40 mm |

Further, the electric resistivity $\rho(\Omega m)$ is calculated by substituting the obtained electrical resistance value ($\Omega$) into the following numerical expression.

$$\rho=(R/L)\times S$$

In the numerical expression, R represents the electric resistance value ($\Omega$) of the test piece, L represents the length (m) of the test piece, and S represents the cross-sectional area (m$^2$) of the test piece. In this numerical expression, the electrical conductivity (S/m) is calculated from the reciprocal of the electric resistivity $\rho$. Further, the electrical conductivity (% IACS) of each test piece is calculated assuming $5.9\times10^7$ (S/m) to be 100% IACS.

EXAMPLES

Hereinafter, the effect of the present invention will be made clear by way of Examples of producing a shaped object by an additive manufacturing method using a Cu-based alloy powder. However, it is noted that the present invention should not be construed as being limited by the description of these Examples.

Examples 1 to 24 and Comparative Examples 1 to 9

Raw material powders (Examples 1 to 24) composed of the M1 component and M2 component listed in Table 1 with a balance of Cu were heated and melted in a crucible made of alumina by high-frequency induction heating in vacuum. Further, as comparative examples, raw material powders (Comparative Examples 1 to 9) composed of the components listed in Table 2 with a balance of Cu were heated and melted by high-frequency induction heating. After the raw material powder had melted, the molten metal was dropped from a nozzle that was formed under the crucible and had a diameter of 5 mm. Argon gas was sprayed on this molten metal to obtain a large number of particles. These particles were classified, and particles having a diameter exceeding 63 $\mu$m were removed, whereby Cu-based alloy powders using the materials of each of Examples 1 to 24 and Comparative Examples 1 to 9 as raw materials were obtained.

[Measurement of laser light absorption coefficient]

The laser light reflection coefficient of the obtained Cu-based powders at a laser wavelength of 1064 nm was measured using a spectrophotometer. The laser light absorption coefficient (%) was calculated by subtracting the laser light reflection coefficient (%) from 100%. In addition, the Cu-based alloy powder of the present invention can be shaped more easily than Cu alone and the relative density of the shaped object is also excellent, and from these facts as well it can be said that the Cu-based alloy powder of the present invention has a high laser light absorption coefficient and is suitable for producing a shaped object by rapid melting and rapid solidification. The results are shown in Table 1.

[Additive manufacturing]

Additive manufacturing with a three-dimensional additive manufacturing apparatus (EOS-M280) was performed using the Cu-based alloy powders made of the materials of Examples 1 to 24 and Comparative Examples 1 to 9 as raw materials to obtain shaped objects (shaped objects which had not been heat treated yet).

[Heat Treatment]

A heat treatment (aging treatment) was then performed on the shaped objects obtained using each Cu-based alloy powder as a raw material at from 350 to 1000°C for from 1 to 10 hours. These heat treatment conditions are such that the heat treatment was performed as deemed appropriate depending on each composition.

[Relative density measurement]

A test piece (10×10×10 mm) was prepared for each heat-treated shaped object, and the relative density (%) was measured by the method described above. The results are shown in Tables 3 and 4.

[Electrical conductivity measurement]

A test piece (3x2x60 mm) was prepared for each heat-treated copper alloy shaped object, and the electrical conductivity (% IACS) was measured by the method described above using the four-terminal method in accordance with "JIS C 2525". The results are shown in Tables 3 and 4.

[Measurement of precipitate size]

A thin film-like test piece was produced from each copper alloy shaped object obtained using the Cu-based powders of the Examples as a raw material by FIB (focused ion beam) processing. Each test piece was observed with a transmission electron microscope (TEM) to confirm the size (maximum diameter) of the second precipitate containing M1 and M2. At this time, the first precipitate and the second precipitate were observed, but by distinguishing the first precipitate and the second precipitate by elemental analysis (TEM-EDX analysis), the measurement was carried out by selecting only the second precipitates. The particle diameter of the second precipitate was observed by TEM to be 100 $\mu$m$^2$, and the maximum diameter of the particles of the inclusion deemed to be present was determined. The results are shown in Tables 5 and 6.

[Table 1]

| Component Composition of Powder (% by mass) | | | | | | | | |
|---|---|---|---|---|---|---|---|---|
| | Additive Element M1 | | | | Additive Element M2 | | | Laser Light Absorption Coefficient (%) |
| | Nd | Zr | Mo | Cr | Ag | Ni | Sn | |
| Example 1 | 0.05 | - | - | - | 0.02 | - | - | 32 |
| Example 2 | - | 0.05 | - | - | 0.02 | - | - | 33 |
| Example 3 | - | - | 0.10 | - | 0.05 | - | - | 35 |
| Example 4 | - | - | - | 0.10 | 0.05 | - | - | 34 |
| Example 5 | 0.20 | - | - | - | 0.05 | - | - | 32 |
| Example 6 | - | 0.20 | - | - | 0.10 | - | - | 36 |
| Example 7 | - | - | 0.50 | - | 0.10 | - | - | 38 |
| Example 8 | - | - | - | 0.50 | 0.15 | - | - | 37 |
| Example 9 | 1.00 | - | - | - | 0.35 | - | - | 38 |
| Example 10 | - | 1.00 | - | - | 0.40 | - | - | 42 |
| Example 11 | - | - | 1.50 | - | 0.20 | - | - | 46 |
| Example 12 | - | - | - | 1.50 | 0.10 | - | - | 45 |
| Example 13 | 5.00 | - | - | - | 0.30 | - | - | 55 |
| Example 14 | - | 5.00 | - | - | 0.30 | - | - | 54 |
| Example 15 | - | - | 8.50 | - | 0.50 | - | - | 58 |
| Example 16 | - | - | - | 9.50 | 0.90 | - | - | 60 |
| Example 17 | 0.50 | - | 0.10 | - | 0.10 | - | - | 39 |
| Example 18 | - | 2.00 | 0.20 | - | 0.15 | - | - | 42 |
| Example 19 | - | 0.50 | - | - | | 0.05 | - | 40 |
| Example 20 | - | - | 1.00 | - | | 0.50 | - | 46 |
| Example 21 | 1.00 | - | - | - | | - | 0.05 | 43 |
| Example 22 | 0.50 | - | - | 0.50 | 0.10 | - | - | 42 |
| Example 23 | 0.80 | 0.80 | - | - | | - | 0.05 | 46 |
| Example 24 | - | 1.00 | - | - | 0.10 | - | 0.10 | 35 |

[Table 2]

| Component Composition of Powder (% by mass) | | | | | | |
|---|---|---|---|---|---|---|
| | | | | | Balance: Cu and unavoidable impurities | |
| | Additive Element M1 | | | | Additive Element M2 | |
| | Nd | Zr | Mo | Cr | Ag | Mn |
| Comparative Example 1 | 0.03 | - | - | - | 0.02 | - |
| Comparative Example 2 | - | 0.03 | - | - | 0.02 | - |
| Comparative Example 3 | - | - | 10.50 | - | 0.80 | - |
| Comparative Example 4 | - | - | - | 11.00 | 0.85 | - |
| Comparative Example 5 | 8.50 | - | - | - | 1.10 | - |
| Comparative Example 6 | - | 8.00 | - | - | 1.50 | - |

(continued)

| Component Composition of Powder (% by mass) | | | | | | |
|---|---|---|---|---|---|---|
| | | | | | Balance: Cu and unavoidable impurities | |
| | Additive Element M1 | | | | Additive Element M2 | |
| | Nd | Zr | Mo | Cr | Ag | Mn |
| Comparative Example 7 | - | - | 3.00 | - | 0.005 | - |
| Comparative Example 8 | - | - | - | 7.00 | 2.00 | - |
| Comparative Example 9 | - | - | - | 8.00 | - | 0.80 |
| : Underlining indicates beyond the defined range of the present invention. Mn is added in place of M2 component. | | | | | | |

[Table 3]

| Shaped Object Properties | | | |
|---|---|---|---|
| | Relative Density (%) | Electrical Conductivity (% IACS) | Tensile Strength (MPa) |
| Example 1 | 97.2 | 96 | 140 |
| Example 2 | 97.5 | 97 | 145 |
| Example 3 | 97.1 | 95 | 142 |
| Example 4 | 97.2 | 95 | 160 |
| Example 5 | 98.0 | 92 | 174 |
| Example 6 | 97.6 | 93 | 167 |
| Example 7 | 98.3 | 90 | 196 |
| Example 8 | 98.5 | 90 | 200 |
| Example 9 | 99.6 | 88 | 230 |
| Example 10 | 99.5 | 91 | 241 |
| Example 11 | 99.8 | 87 | 276 |
| Example 12 | 99.9 | 86 | 287 |
| Example 13 | 99.8 | 80 | 346 |
| Example 14 | 99.9 | 82 | 386 |
| Example 15 | 99.9 | 74 | 379 |
| Example 16 | 99.9 | 72 | 391 |
| Example 17 | 98.0 | 93 | 268 |
| Example 18 | 99.8 | 88 | 366 |
| Example 19 | 99.5 | 91 | 263 |
| Example 20 | 99.7 | 90 | 274 |
| Example 21 | 99.7 | 92 | 307 |
| Example 22 | 99.0 | 90 | 279 |
| Example 23 | 99.9 | 85 | 291 |
| Example 24 | 99.4 | 86 | 225 |

[Table 4]

| Shaped Object Properties | | |
|---|---|---|
| | Relative Density (%) | Electrical Conductivity (% IACS) |
| Comparative Example 1 | 93.4 | 96 |

(continued)

| Shaped Object Properties | | |
|---|---|---|
| | Relative Density (%) | Electrical Conductivity (% IACS) |
| Comparative Example 2 | <u>93.8</u> | 95 |
| Comparative Example 3 | 99.7 | <u>56</u> |
| Comparative Example 4 | 99.8 | <u>48</u> |
| Comparative Example 5 | 99.8 | <u>60</u> |
| Comparative Example 6 | 99.9 | <u>51</u> |
| Comparative Example 7 | 99.8 | <u>63</u> |
| Comparative Example 8 | 99.9 | <u>58</u> |
| Comparative Example 9 | 99.9 | <u>67</u> |
| : Underlining indicates beyond the defined range of the present invention. | | |

[Table 5]

| Precipitates in Shaped Object | |
|---|---|
| | Size of Precipitates (nm) |
| Example 1 | 54 |
| Example 2 | 32 |
| Example 3 | 69 |
| Example 4 | 78 |
| Example 5 | 82 |
| Example 6 | 103 |
| Example 7 | 99 |
| Example 8 | 117 |
| Example 9 | 186 |
| Example 10 | 256 |
| Example 11 | 328 |
| Example 12 | 377 |
| Example 13 | 490 |
| Example 14 | 505 |
| Example 15 | 783 |
| Example 16 | 945 |
| Example 17 | 132 |
| Example 18 | 357 |
| Example 19 | 94 |
| Example 20 | 240 |
| Example 21 | 201 |
| Example 22 | 415 |
| Example 23 | 431 |
| Example 24 | 188 |

[Table 6]

| Precipitates in Shaped Object | |
| --- | --- |
| | Size of Precipitates (nm) |
| Comparative Example 1 | 23 |
| Comparative Example 2 | 27 |
| Comparative Example 3 | 128 |
| Comparative Example 4 | 201 |
| Comparative Example 5 | 440 |
| Comparative Example 6 | 561 |
| Comparative Example 7 | 10 |
| Comparative Example 8 | <u>1053</u> |
| Comparative Example 9 | <u>-</u> |
| : Underlining indicates beyond the defined range of the present invention. | |

As shown in Tables 1, 3, and 5, the Cu-based alloy powders of Examples 1 to 24 had better relative density than that of the comparative examples shown in Table 4, and were all evaluated as having high relative density and electrical conductivity. Since the Cu-based alloy powders of the examples do not reflect laser light easily, bumping is less likely to occur, and the cause of voids is suppressed, resulting in an increased relative density. Further, since the size of the inclusions was 1000 nm or less, electrical conductivity also improved due to precipitation, and no problems due to obstruction of the conductive path or reduction in strength were observed.

In Comparative Examples 1 and 2, since the amount of the M1 component was a trace amount, it was difficult for laser light to be reflected, and excessive energy was required for shaping, resulting in a decrease in the relative density of the shaped objects produced by the additive manufacturing method. In Comparative Examples 3 and 4, the M1 component was in excess, while on the other hand the amount of the M2 component was insufficient. As a result, the M1 component remained solid solution in the parent phase and could not be adequately controlled with the aging treatment alone, and precipitation was not sufficient. Therefore, electrical conductivity was low. In Comparative Examples 5, 6, and 8, the M2 component was in excess, and thus the electrical conductivity was low. Moreover, in Comparative Example 8, the size of the precipitates exceeded 1000 nm, resulting in a decrease in strength. In Comparative Example 7, since the amount of the M2 component was too small, the M1 component could not sufficiently form precipitates with the M2 component, and the precipitation of M1 could not be adequately controlled with the aging treatment, resulting in low electrical conductivity. In Comparative Example 9, Mn was used in place of Ag in the M2 component. According to the Cr-Mn binary system phase diagram, when Mn is 60% by mass or less, Mn does not form precipitates with Cr. Therefore, it was difficult for precipitates with the M1 component to form, and in Comparative Example 9, the M1 component remained in solid solution in the parent phase even after the heat treatment. As a result, the electrical conductivity exhibited a low value.

The Cu-based alloy powder according to the present invention is applied to the production of shaped objects by various processes involving rapid melting and rapid solidification. For example, this powder is suitable for 3D printers in which the powder is sprayed from a nozzle, laser coating methods in which the powder is sprayed from a nozzle, and the like.

**Claims**

1.   A Cu-based alloy powder comprising, in terms of % by mass:

from 0.05 to 10.0% of an additive element M1 component consisting of one or more selected from the group consisting of Nd, Zr, Mo, and Cr; and
from 0.01 to 1.00% of a third element M2 component consisting of one or more elements that have a solid solubility limit in the M1 component contained in the Cu-based alloy powder of 1.0% by mass or less;
the balance consisting of Cu and unavoidable impurities.

2.   The Cu-based alloy powder according to claim 1, wherein the M2 component consists of one or more selected from the group consisting of Ag, Ni, and Sn.

3. The Cu-based alloy powder according to claim 1 or 2, wherein the Cu-based alloy powder has a sphericity of from 0.80 to 0.95.

4. The Cu-based alloy powder according to claim 1 or 2, wherein the Cu-based alloy powder has an average particle diameter $D_{50}$ of from 10 to 100 $\mu$m.

5. A shaped object made of a Cu-based alloy comprising, in terms of % by mass:

   from 0.05 to 10.0% of an additive element M1 component consisting of one or more selected from Nd, Zr, Mo, and Cr; and
   from 0.01 to 1.00% of a third element M2 component consisting of one or more elements that have a solid solubility limit in the M1 component contained in the Cu-based alloy of 1.0% by mass or less;
   the balance consisting of Cu and unavoidable impurities,
   wherein not only a first precipitate consisting of Cu and the M1 component but also a second precipitate containing the M2 component are precipitated in the Cu-based alloy.

6. The Cu-based alloy shaped object according to claim 5, wherein the M2 component consists of one or more selected from the group consisting of Ag, Ni, and Sn, and the second precipitate is a precipitate that includes the M1 component and the M2 component.

7. The Cu-based alloy shaped object according to claim 5 or 6, wherein the second precipitate has a size of 1000 nm or less in terms of equivalent circle diameter.

8. The Cu-based alloy shaped object according to claim 5 or 6, wherein the Cu-based alloy shaped object has a relative density of 97.0% or more.

9. The Cu-based alloy shaped object according to claim 5 or 6, wherein the Cu-based alloy shaped object has an electrical conductivity of 70.0% IACS or higher.

10. The Cu-based alloy shaped object according to claim 5, obtained by an additive manufacturing method using the Cu-based alloy powder according to claim 1.

| INTERNATIONAL SEARCH REPORT | International application No. |
|---|---|
| | **PCT/JP2023/003297** |

**A. CLASSIFICATION OF SUBJECT MATTER**

*B22F 1/00*(2022.01)i; *B22F 3/105*(2006.01)i; *B22F 10/28*(2021.01)i; *B22F 10/34*(2021.01)i; *B33Y 70/00*(2020.01)i; *B33Y 80/00*(2015.01)i; *C22C 9/00*(2006.01)i; *B22F 10/64*(2021.01)n
FI:     B22F1/00 L; B22F10/28; B22F3/105; B22F10/34; C22C9/00; B33Y80/00; B33Y70/00; B22F10/64

According to International Patent Classification (IPC) or to both national classification and IPC

**B. FIELDS SEARCHED**

Minimum documentation searched (classification system followed by classification symbols)

B22F1/00; B22F3/105; B22F10/28; B22F10/34; B33Y70/00; B33Y80/00; C22C9/00; B22F10/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-017639 A (SANYO SPECIAL STEEL CO., LTD.) 15 February 2021 (2021-02-15) paragraphs [0010]-[0015], [0026]-[0033], [0037], [0038], [0045], [0046], [0050], example 16 | 1-10 |
| Y | | 3 |
| X | WO 2019/239655 A1 (THE FURUKAWA ELECTRIC CO., LTD.) 19 December 2019 (2019-12-19) paragraphs [0008], [0009], [0012]-[0017], [0020]-[0023], [0025]-[0027], [0029]-[0031], examples 17, 20 | 1-2, 4-10 |
| Y | | 3 |
| P, X | JP 2022-160961 A (SANYO SPECIAL STEEL CO., LTD.) 20 October 2022 (2022-10-20) paragraphs [0009]-[0026], [0034], [0035], [0043], [0044], [0048], [0049], examples 3, 8, 12 | 1-10 |

☐ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/003297**

| Patent document cited in search report | | | Publication date (day/month/year) | Patent family member(s) | | | Publication date (day/month/year) |
|---|---|---|---|---|---|---|---|
| JP | 2021-017639 | A | 15 February 2021 | US | 2022/0349029 | A1 | |
| | | | | paragraphs [0013]-[0030], [0050]-[0062], [0070]-[0072], [0084]-[0086], [0092], [0093], example 16 | | | |
| | | | | WO | 2021/015119 | A1 | |
| | | | | EP | 4005700 | A1 | |
| | | | | CN | 113891948 | A | |
| WO | 2019/239655 | A1 | 19 December 2019 | (Family: none) | | | |
| JP | 2022-160961 | A | 20 October 2022 | WO | 2022/215468 | A1 | |
| | | | | paragraphs [0009]-[0026], [0034], [0035], [0043], [0044], [0048], [0049], examples 3, 8, 12 | | | |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008081840 A

- WO 2019039058 A